# EUROPEAN PATENT APPLICATION

(11) **EP 2 060 787 A2**
(43) Date of publication of application: **20.05.2009**
(21) Application number: 08165567.2
(22) Date of filing: 01.10.2008
(51) Int. Cl.: F03D 9/00, F03D 11/00

(54) **Wind turbine geothermal heating and cooling system**

(30) Priority: 12.10.2007 US 871196
(71) Applicant: GENERAL ELECTRIC COMPANY, Schenectady, NY 12345 (US)
(72) Inventor: Eggleston, Eric D., Tehachapi, CA 93561 (US)
(74) Representative: Bedford, Grant Richard

(57) **Abstract**

A wind turbine (100) having a tower (110) and a nacelle (120), includes at least one unit (210) to be heated or cooled. The unit (210) can be housed within the tower (110) or nacelle (120). A geothermal heat exchanger (150) can also be located inside the tower (110) or nacelle (1200. A geothermal cooling circuit (160) provides flow communication between the unit (210) to be heated or cooled and the heat exchanger (150), and contains a thermal transfer medium flowing between the unit (210) and the heat exchanger (150) for facilitating heating or cooling of the unit (210).

## Description

This invention relates generally to a wind turbine having at least one unit or component to be heated and/or cooled, and, in particular, to heating and/or cooling at least one component or unit of a wind turbine using a geothermal system.

Recently, wind turbines have received increased attention as environmentally safe and relatively inexpensive alternative energy sources. Wind turbines do not emit greenhouse gases (GHGs), and therefore, do not contribute to global warming. Wind turbines also allow a country to become more energy independent, by the domestic production of electrical energy. With the growing interest in wind generated electricity, considerable efforts have been made to develop wind turbines that are reliable and efficient.

Wind is usually considered to be a form of solar energy caused by uneven heating of the atmosphere by the sun, irregularities of the earth's surface, and rotation of the earth. Wind flow patterns are modified by the earth's terrain, bodies of water, and vegetation. The terms wind energy or wind power, describe the process by which the wind is used to rotate a shaft and subsequently generate mechanical power or electricity.

Typically, wind turbines are used to convert the kinetic energy in the wind into mechanical power. This mechanical power may be used for specific tasks (such as grinding grain or pumping water) or a generator may convert this mechanical power (i.e., the rotation of a shaft) into electricity. A wind turbine usually includes an aerodynamic mechanism (e.g., blades or rotor) for converting the movement of air into a mechanical motion (e.g., rotation), which is then converted with a generator into electrical power.

A wind turbine comprises several mechanical and electrical components which generate heat energy losses during their operation. These components or units include, for example, a gearbox (if provided) and a generator. Both of these are typically arranged in the nacelle rotatably supported by a tower. The components also include a converter and a transformer, both of which are typically located in, or near, the base of the tower and are utilized to feed electrical energy converted from the mechanical energy of the rotor via the generator into the grid. In addition, the components include controllers for controlling operation of the wind turbine. The controllers are typically arranged within the tower. Due to the increased performance of modem wind turbines, effective cooling of the above-mentioned components is increasingly difficult.

Typically, the units and components of a wind turbine to be cooled are arranged within a cooling air stream generated by fans. However, in particular with respect to the units to be cooled and arranged in the tower of a wind turbine, it is difficult to feed enough air into the tower for sufficiently cooling the components.

Also, wind turbine components needing to be heated during cold weather operation, typically use resistive electric heaters and fans which reduce net output of the wind turbine. Resistive electric heaters demand a large amount of power, normally supplied by the wind turbine. The power consumed by the electric heaters reduces the net power supplied to the electrical grid and the net power output of the wind turbine.

Accordingly, there exists a need for an improved system to heat and/or cool the various components of a wind turbine.

According to one aspect of the present invention, a wind turbine comprising a tower and a nacelle rotatably supported by the tower is disclosed. At least one unit to be cooled can be arranged in the tower or nacelle. At least one heat exchanger is located inside the tower or nacelle. The heat exchanger is geothermally cooled. A cooling circuit provides flow communication between the unit to be cooled and the heat exchanger. The cooling circuit contains a cooling medium that flows between the unit and the heat exchanger for facilitating cooling of the unit.

According to another aspect of the present invention, a wind turbine comprising a tower and a nacelle rotatably supported by the tower is disclosed. At least one unit to be heated can be arranged in the tower or nacelle. At least one heat exchanger is located inside the tower or nacelle. The heat exchanger is geothermally heated. A heating circuit provides flow communication between the unit to be heated and the heat exchanger. The heating circuit contains a heat transfer medium that flows between the unit and the heat exchanger for facilitating heating of the unit.

According to yet another aspect of the present invention, a wind turbine comprising a foundation and a tower supported by the foundation is disclosed. The wind turbine includes at least one unit to be heated or cooled. At least one thermal transfer system is located within or near the wind turbine. The thermal transfer system comprises a thermal circuit, and at least a portion of the thermal circuit extends into, at least one of, the foundation and the earth near the foundation. The thermal transfer system transfers heat between the unit to be heated or cooled, and at least one of, the foundation and the earth.

Various aspects and embodiments of the present invention will now be described in connection with the accompanying drawings, in which:
FIG. 1 is a front view illustration of an exemplary wind turbine with a cross sectional illustration of the foundation and geothermal heating and cooling system according to one aspect of the present invention.
FIG. 2 is a partial, cross sectional illustration of an exemplary wind turbine with a cross sectional illustration of the foundation and geothermal heating and cooling system according to one aspect of the present invention.
FIG. 3 is a partial, cross sectional illustration of an exemplary wind turbine with a cross sectional illustration of the foundation and geothermal heating and cooling system according to one aspect of the present invention.

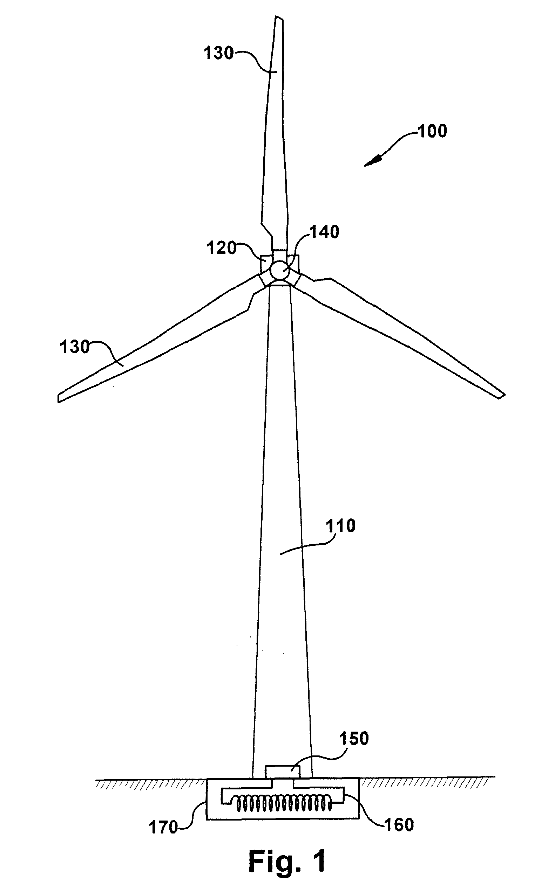

A horizontal axis wind turbine (HAWT), hereafter "wind turbine", 100 is illustrated in Fig.1. However, the present invention can be employed with any wind turbine, including, but not limited to vertical axis wind turbines. The wind turbine 100 may include a tubular tower 110, which is often manufactured of steel. The tower 110 may be erected by stacking multiple tower segments on top of each other. The tower 110 supports the weight of the nacelle 120, blades 130 and hub 140. Towers may also be of the lattice (or truss) type, and tubular towers may alternatively be formed of concrete or other suitable materials. The nacelle 120 typically houses the drive train (e.g., gearbox, shafts, couplings, generator, etc.), as well as the main frame (also called bedplate) and yaw drives. Other items such as the control electronics may be housed within the nacelle 120 or in tower 110. Typically, the nacelle 120 has an outer skin that is comprised of a lightweight material such as fiberglass or a graphite composite. The main function of the nacelle skin is to protect the contents from the elements (e.g., rain, ice, snow, etc.).

The blades 130 are connected to the hub 140, and the hub may contain a pitch control mechanism to control the pitch angle of each blade. Typically, three blades are employed in most commercial wind turbines. However, one, two, or four or more blades could be employed as well. The blades convert the kinetic energy of the wind into mechanical energy by rotating a low speed shaft. Blades may be manufactured from fiberglass, graphite composites, fiberglass reinforced plastics or wood/epoxy laminates, or other suitable materials. The low speed shaft is connected to the hub 140 typically via a bolted flange coupling.

Various control and power electronics can be located at the base of tower 110. The control electronics can control the various operating modes (e.g., blade pitch angle, start-up or shut-down sequence, etc.) of wind turbine 100. The power electronics may include transformers and converters, and these power electronics are used to transform the voltage output by the generator into the proper form for transmission onto the electrical grid. While having the controls at the base of the tower is one typical implementation, it is not the only possible configuration. The controls could also be placed in the nacelle or in other sections of the tower. In other implementations, the control or power electronics could be housed outside but nearby wind turbine 100. The geo-thermal heating or cooling system, as embodied by the present invention, can also be adapted for use on components in locations other than the tower base via the proper pipe and hose routing and connection.

Typically, a radiator is used to water-cool the control and power electronics. The heat extracted is then dumped to the air. This approach may work well when the electronics need to be cooled and the ambient air temperature is cold, but is often less than satisfactory at warmer ambient temperatures. For example, when the ambient air temperature is near 38 degrees C (100 degrees F) the amount of heat that can be dumped to the air is very limited. Conversely, when the ambient air temperature is very cold, the electronics may need to be kept above freezing (0 degrees C). Current systems would need to incorporate a separate heater for this purpose, and the energy taken from the generator can reduce the efficiency and power output of the wind turbine.

Most commercial, land based wind turbines require a large foundation (e.g., reinforced concrete). This foundation is dug into the earth and extends from about eight to about 15 feet deep into the soil, which is below the frost line. In some cases, the foundation may go deeper than 15 feet. The soil temperature, below the frost line, is relatively constant (e.g., 15-25 degrees C). This temperature range is relatively cool compared to hot summer air (in some locations), and relatively warm compared to cold winter air (in some locations). According to aspects of the present invention, a geothermal heating and cooling system can take advantage of this relatively constant ground temperature and use it to heat the wind turbine's electronics in the winter, and cool the electronics in the summer.

Referring to Figs. 1-3, the geothermal system 150 can have one section located within tower 110 and have another section comprised of piping 160 located within the wind turbine's foundation 170. The portion 150 inside tower 110 can include a heat exchanger (not shown) to exchange heat with various power and control electronics 210. The power and control electronics 210 are typically located inside tower 110 at the base thereof, but the electronics may also be located higher in the tower, in the nacelle 120, or even outside tower 110.

Piping 220 may be routed from the heat exchanger located in system 150 to the electronics 210. If there are electronics or other units to be heated or cooled the piping could be routed up into tower 110 or even into nacelle 120. For example, the generator (not shown), which is located in nacelle 120, can be cooled by routing piping 220 up tower 110 and into nacelle 120. In this manner any unit or device needing to be heated or cooled, within the nacelle, could be reached by appropriately routing piping 220.

Typically, a pump (not shown) is included with system 150 for pumping a thermal transfer medium (e.g., water, antifreeze, oil, etc.) through a distribution system (e.g., piping 220 and 160). The pump feeds the thermal transfer medium through the units and components to be heated or cooled (e.g. a frequency converter, a transformer, controller, generator, gear box, etc.) for cooling these units or components directly or indirectly.

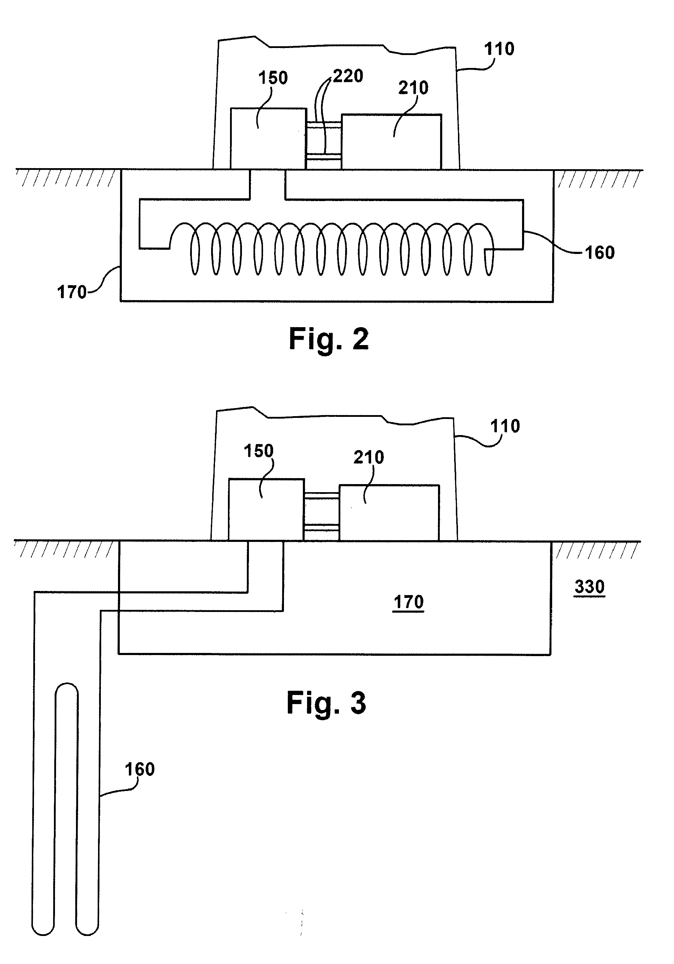

Fig. 2 illustrates one embodiment of the present invention where the geothermal piping 160 is contained within foundation 170. In other embodiments, the piping could be contained in the surrounding soil or in trenches. Typically, foundations 170 are greater than about 10 feet deep and the lower portion of the foundation is well below the frost line. The foundation, typically reinforced concrete, is also a large thermal mass that can function as a heat source or heat sink. In warmer seasons, such as the summer, the concrete foundation can absorb a large amount of heat generated by the various power and control electronics. In colder seasons, such as the winter, the lower part of the foundation is below the frost line, and can be used as a heat source to maintain the temperature of the various power and control electronics above freezing.

Fig. 3 illustrates another embodiment where the geothermal piping 160 extends into the earth near the wind turbine. The piping 160 is shown to the side of the wind turbine's foundation 170. However, the piping could also be arranged to encircle all or a portion of the wind turbine's foundation. The earth 330 functions as an excellent heat source or heat sink.

It is common to have trenches formed in the earth between turbines or between turbines and power or control substations. The trenches can contain various cables for power transmission and control signals. These trenches could also be used to house geothermal piping 160. In some embodiments, one trench could be used to contain geothermal piping for multiple turbines.

The use of one heat exchanger has been described, but it would be possible to use multiple heat exchangers. Multiple heat exchangers could be located within the same or different parts of wind turbine 100, and be connected to the same geothermal piping 160 or to separate and distinct loops.

Geothermal piping 160 could be arranged in a closed loop field, open loop field, horizontal closed loop field, vertical closed loop field, slinky closed loop field, or as a closed pond loop. A closed pond loop could be used when the wind turbine is near a pond, lake or other water source. The geothermal piping could be placed near the bottom of the water source and the water would then act as the heat source or heat sink.

The various embodiments have been described in conjunction with a horizontal axis wind turbine (HAWT), but it is to be understood that various aspects of the invention could also be applied to vertical axis wind turbines (VAWT) as well. While various embodiments are described herein, it will be appreciated from the specification that various combinations of elements, variations or improvements therein may be made, and are within the scope of the invention.

## Claims

1. A wind turbine (100) comprising:
a tower (110);
a nacelle (120) rotatably supported by said tower (110);
at least one unit (210) to be heated or cooled and arranged in, at least one of said tower and said nacelle;
at least one thermal transfer system (150) located inside, at least one of said tower (110) and said nacelle (120), said at least one thermal transfer system (150) configured to be geothermally heated or cooled;
and a thermal circuit (160) providing flow communication between said at least one unit (210) to be heated or cooled and said at least one thermal transfer system (150), said thermal circuit (160) containing a heat transfer medium flowing between said at least one unit (210) and said at least one thermal transfer system (150) for facilitating heating or cooling said at least one unit (210).

2. A wind turbine (100) comprising:
a foundation (170);
a tower (110) supported by said foundation (170);
at least one unit (210) to be heated or cooled;
at least one thermal transfer system (150), at least a portion of said at least one thermal transfer system located within or near said wind turbine, said thermal transfer system comprising a thermal circuit (160) containing a heat transfer medium, at least a portion of said thermal circuit extending into at least one of, said foundation (170) and earth (330) near said foundation (170);
wherein, said thermal transfer system transfers heat between said at least one unit to be heated or cooled, and at least one of said foundation (170) and said earth (330).

3. The wind turbine (100) according to any of the preceding claims, wherein a portion of said thermal circuit (160) is contained within a foundation (170) of said wind turbine.

4. The wind turbine (100) according to any of the preceding claims, wherein a portion of said thermal circuit (160) is contained within the earth near said wind turbine.

5. The wind turbine (100) according to any of the preceding claims, wherein a portion of said thermal circuit (160) is contained within a trench, said trench located near said wind turbine.

6. The wind turbine (100) according to any of the preceding claims, wherein said thermal circuit (160) is a closed loop.

7. The wind turbine (100) according to any of the preceding claims, wherein said thermal transfer system (150) comprises at least one pump for pumping the heat transfer medium from said at least one unit (210) to said at least one thermal transfer system (150).

8. The wind turbine (100) according to any of the preceding claims, wherein the thermal transfer system (150) is a geothermal system.

9. The wind turbine (100) according to any of the preceding claims, wherein said thermal circuit (160) is substantially contained within the foundation (170) of said wind turbine.

10. The wind turbine (100) according to any of the preceding claims, wherein said thermal circuit (160) is substantially contained within the earth (330) near said wind turbine.
